# EUROPEAN PATENT APPLICATION

(11) **EP 3 264 283 A1**
(43) Date of publication of application: **03.01.2018**
(21) Application number: 15885278.0
(22) Date of filing: 27.11.2015
(51) Int. Cl.: G06F 17/30

(54) **CONCURRENCY CONTROL METHOD AND APPARATUS**

(30) Priority: 13.03.2015 CN 201510111849
(71) Applicant: Huawei Technologies Co., Ltd., Longgang District Shenzhen, Guangdong 518129 (CN)
(72) Inventor: ZHENG, Xiaojin, Shenzhen Guangdong 518129 (CN); XIAO, Yulei, Shenzhen Guangdong 518129 (CN); YE, Tao, Shenzhen Guangdong 518129 (CN)
(74) Representative: Epping - Hermann - Fischer
(86) International application number: PCT/CN2015/095806
(87) International publication number: WO 2016/145909

(57) **Abstract**

Embodiments of the present invention provide a concurrency control method, including: receiving at least two transaction operation requests, where each transaction operation request of the at least two transaction operation requests includes operation object information and operation type information, the operation object information is used to indicate an operation object of the transaction operation request, and the operation type information includes a write operation or a read operation; making a lock-use application according to the at least two transaction operation requests; and determining, according to a requested lock status and a current lock status in the lock-use application, whether the application is passed, and if the application is passed, determining to perform concurrency control on the at least two transaction operation requests by using the requested lock status, where the lock status includes at least three modes: a shared read mode, a shared write mode, and an exclusive mode, where the shared write mode includes allowing two or more write operations to be simultaneously performed on the operation object. According to the concurrency control method, a database system concurrency throughput capability is improved.

## Description

### TECHNICAL FIELD

The present invention relates to the field of computer technologies, and specifically, to a concurrency control method and apparatus.

### BACKGROUND

In computer science, especially in the fields of programming, operating systems, multiprocessing, databases, or the like, concurrency control is a mechanism for ensuring timely correction of an error caused by concurrent operations. Concurrency control is performed on a per-transaction basis. Concurrency control refers to various technologies used to protect database integrity when multiple users simultaneously update running. Concurrency mechanism incorrectness may cause problems such as dirty read, phantom read, and non-repeatable read. An objective of concurrency control is to ensure that a user's work does not improperly interfere with another user's work. In some cases, these measures ensure that when a user performs an operation together with another user, an obtained result is the same as a result obtained when the user performs an operation independently. In some other cases, these measures ensure that a user's work is affected by another user in a predetermined manner.

A concurrency control task in a database management system (DBMS) is to ensure that when multiple transactions simultaneously access same data in a database, isolation and uniformity of the transactions and database uniformity are not compromised. The following uses an example to describe a data inconsistency problem caused by concurrent operations. There are two train ticket offices simultaneously reading that a quantity of remaining tickets in a ticket database for a train is X. The two ticket offices separately sell one ticket and simultaneously change the quantity to X-1 and write X-1 back to the database, resulting in that two train tickets are actually sold, but only one is subtracted from a record of the database. A reason for this case is: two transactions read same data and simultaneously change the data, and a result submitted by one of the transactions affects a result submitted by the other transaction, resulting in that a data change by the other transaction is lost and that the isolation of the transactions is compromised. Concurrency control is to resolve such problems. Locking, a time stamp, optimistic concurrency control, and pessimistic concurrency control are technical means mainly applied for concurrency control.

A main concurrency control method for using a locking protocol to resolve data inconsistency in concurrency control is locking (Locking). Locking is to schedule concurrent operations in a correct manner to prevent a user's transaction from being interfered by another transaction during an execution process, so as to avoid causing data inconsistency. According to locking, a transaction has a particular control capability over data to be operated by the transaction. Locking generally includes three links. The first link is applying for locking, that is, before operation, a transaction needs to make a locking application for data to be used by the transaction. The second link is acquiring a lock, that is, when conditions are ripe, a system allows the transaction to lock the data, so that the transaction gains control over the data. The third link is releasing the lock, that is, after the operation is complete, the transaction gives up control over the data.

There are two basic locking types as follows:

### 1. Exclusive locks (Exclusive Locks, X locks for short)

An exclusive lock is also referred to as an exclusive lock or a write lock. Once a transaction T adds an exclusive lock (X lock) to a data object A, only T is allowed to read and change A, and any other transactions neither can read or change A nor can add any type of lock to A any more until T releases the lock on A.

### 2. Shared locks (Shared Locks, S locks for short)

A shared lock is also referred to as a read lock. If a transaction T adds a shared lock (S lock) to a data object A, another transaction can add only an S lock to A and cannot add an X lock until the transaction T releases the S lock on A.

However, on the one hand, locking can ensure an ACID property (four basic features of a database: Atomicity atomicity, Consistency consistency, Isolation isolation, and Durability durability) of a database transaction. On the other hand, existence of locking may affect concurrent performance of the database. A locking type based on an existing design mode may severely restrict a throughput capability of an entire system in a high concurrency case. Therefore, an efficient concurrency control technology is the key to designing high-performance database software.

### SUMMARY

To resolve a prior-art problem that a concurrency throughput capability of a database system is restricted in a high concurrency case, embodiments of the present invention provide a concurrency control method and apparatus, including:

According to a first aspect, a concurrency control method is provided, including:
receiving at least two transaction operation requests, where each transaction operation request of the at least two transaction operation requests includes operation object information and operation type information, the operation object information is used to indicate an operation object of the transaction operation request, and the operation type information includes a write operation or a read operation;
making a lock-use application according to the at least two transaction operation requests; and
determining, according to a requested lock status and a current lock status in the lock-use application, whether the application is passed, and if the application is passed, determining to perform concurrency control on the at least two transaction operation requests by using the requested lock status, where the lock status includes at least three modes: a shared read mode, a shared write mode, and an exclusive mode, where the shared write mode includes allowing two or more write operations to be simultaneously performed on the operation object, and the lock status includes the requested lock status and the current lock status.

With reference to the first aspect, in a first possible implementation manner of the first aspect, the determining, according to a requested lock status and a current lock status in the lock-use application, whether the application is passed includes:
when both the requested lock status and the current lock status are the shared read mode, or both the requested lock status and the current lock status are the shared write mode, passing the application.

With reference to the first aspect or the first possible implementation manner of the first aspect, in a second possible implementation manner of the first aspect, if the application is not passed, a next lock-use opportunity is awaited to make the lock-use application again, where the next lock-use opportunity includes an opportunity existing when the current lock status ends.

With reference to the second possible implementation manner of the first aspect, in a third possible implementation manner of the first aspect, that if the application is not passed includes:
when the requested lock status or the current lock status is the exclusive mode, or when the requested lock status is the shared write mode and the current lock status is the shared read mode, or when the requested lock status is the shared read mode and the current lock status is the shared write mode, the application is not passed.

With reference to the first aspect and any possible implementation manner of the first possible implementation manner of the first aspect to the third possible implementation manner of the first aspect, in a fourth possible implementation manner of the first aspect, the operation object includes multiple local operation objects, and that the two or more write operations are simultaneously performed on the operation object includes: the two or more write operations are separately performed on different local operation objects in the multiple local operation objects of the operation object.

According to a second aspect, a concurrency control apparatus is provided, including a receiving module, a lock-use application module, a central decision module, and a decision execution module, where
the receiving module is configured to receive at least two transaction operation requests, where each transaction operation request of the at least two transaction operation requests includes operation object information and operation type information, the operation object information is used to indicate an operation object of the transaction operation request, and the operation type information includes a write operation or a read operation;
the lock-use application module is configured to make a lock-use application according to the at least two transaction operation requests; and
the central decision module is configured to determine, according to a requested lock status and a current lock status in the lock-use application, whether the application is passed, and if the application is passed, determine, by using the decision execution module, to perform concurrency control on the at least two transaction operation requests by using the requested lock status, where the lock status includes at least three modes: a shared read mode, a shared write mode, and an exclusive mode, where the shared write mode includes allowing two or more write operations to be simultaneously performed on the operation object, and the lock status includes the requested lock status and the current lock status.

With reference to the second aspect, in a first possible implementation manner of the second aspect, the central decision module is specifically configured to determine:
when both the requested lock status and the current lock status are the shared read mode, or both the requested lock status and the current lock status are the shared write mode, to pass the application.

With reference to the second aspect or the first possible implementation manner of the second aspect, in a second possible implementation manner of the second aspect, if the central decision module determines that the application is not passed, the central decision module determines to await a next lock-use opportunity to make the lock-use application again, where the next lock-use opportunity includes an opportunity existing when the current lock status ends.

With reference to the second possible implementation manner of the second aspect, in a third possible implementation manner of the second aspect, the central decision module is specifically configured to determine:
when the requested lock status or the current lock status is the exclusive mode, or when the requested lock status is the shared write mode and the current lock status is the shared read mode, or when the requested lock status is the shared read mode and the current lock status is the shared write mode, not to pass the application.

With reference to the second aspect and any possible implementation manner of the first possible implementation manner of the second aspect to the third possible implementation manner of the second aspect, in a fourth possible implementation manner of the second aspect, the operation object includes multiple local operation objects, and that the two or more write operations are simultaneously performed on the operation object includes: the two or more write operations are separately performed on different local operation objects in the multiple local operation objects of the operation object.

In the embodiments of the present invention, a lock status includes at least three modes: a shared read mode, a shared write mode, and an exclusive mode, where addition of the shared write mode enables that a concurrency throughput capability of a database system can be efficiently improved in a high-concurrency case of the system.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is an exemplary diagram introducing a background of the present invention;
FIG. 2 is another exemplary diagram introducing a background of the present invention;
FIG. 3 is still another exemplary diagram introducing a background of the present invention;
FIG. 4 is yet another exemplary diagram introducing a background of the present invention;
FIG. 5 is yet still another exemplary diagram introducing a background of the present invention;
FIG. 6 is a further exemplary diagram introducing a background of the present invention;
FIG. 7 is a schematic flowchart of a concurrency control method according to an embodiment of the present invention; and
FIG. 8 is a schematic block diagram of a concurrency control apparatus according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

To make readers understand what concurrency control is, the technical background of the present invention is further introduced first.

Because multiple users are generally allowed to simultaneously use and share a current mainstream relational database, the database has a concurrency control mechanism, that is, to control the database to prevent causing data errors and program runtime errors when the multiple users concurrently use the database, so as to ensure data integrity.

When the multiple users concurrently access data, multiple transactions simultaneously access same data, causing severe data errors and program runtime errors. Then, what is a transaction and concurrency control?

A transaction is a user-defined sequence of database operations, and is a very small, indivisible unit of work, where either all of these operations are performed or none of these operations is performed. For example, in an SQL language, there are three transaction statements defined as follows:
BEGINTRANSACTION;
COMMIT; and
ROLLBACK

BEGINTRANSACTION is a start mark of a transaction and the transaction ends with COMMIT or ROLLBACK. COMMIT is used to commit all operations of a transaction. For ROLLBACK, in a running process of a transaction, once a fault occurs and the transaction cannot continue to be executed, a system undoes all database operations just completed in the transaction and rolls back to a status existing when the transaction starts. To make full use of a system resource and effectively utilize a shared resource in a database, multiple transactions need to be concurrently executed, and control performed by the database on the concurrently executed transactions is concurrency control.

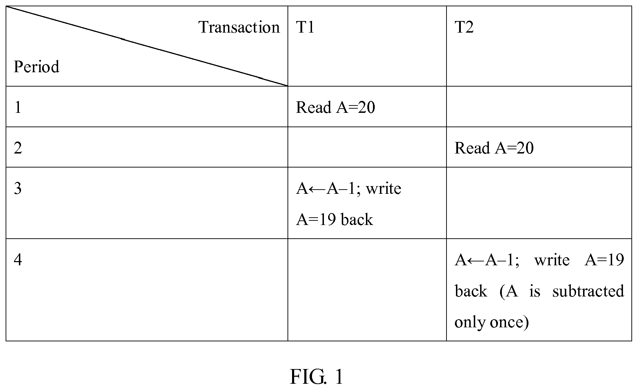

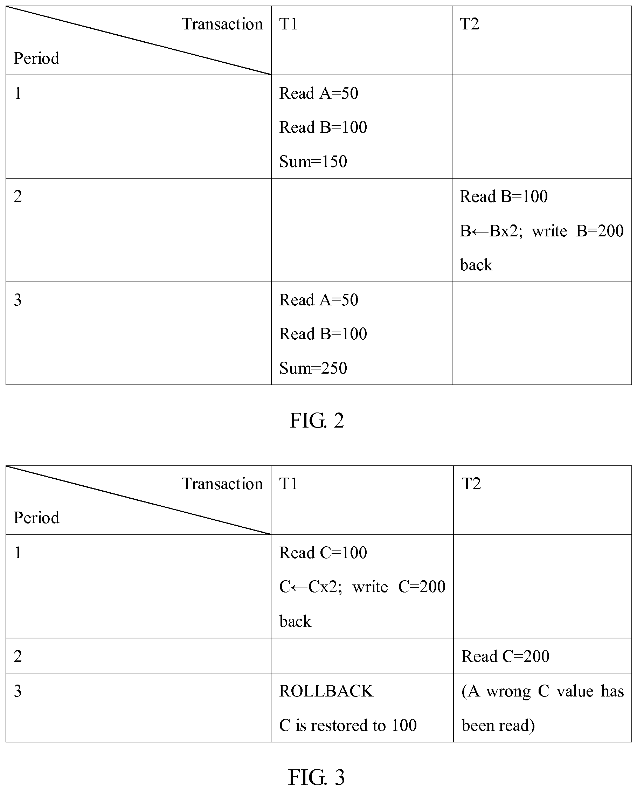

However, data in a database may be compromised due to various reasons. For example, when multiple transactions are concurrently run, operations of different transactions are performed crosswise, or a transaction is forcibly stopped or interrupted in a running process. Therefore, when concurrent operations are performed on transactions, data inconsistency is probably caused. Next, let's take a specific example. For example, if the following operation sequence exists in an online booking system for airline tickets:
1. A ticket office a (set to be a T1 transaction) reads that a quantity of remaining airline tickets for a flight is A; and
   A=20 is given.
2. A ticket office b (set to be a T2 transaction) reads a quantity A of remaining airline tickets for the same flight, which is also 20.
3. The ticket office a (the T1 transaction) sells one airline ticket, changes the quantity of remaining airline tickets by subtracting 1 (A←A-1), and writes A=19 back to a database.
4. The ticket office b (the T2 transaction) also sells one airline ticket, changes the quantity of remaining airline tickets by subtracting 1 (A←A-1), and writes A=19 back to the database. We can learn from these operations that, the data changed by the ticket office b overwrites the data changed by the ticket office a; two airline tickets are actually sold but 19 is incorrectly entered in the database, and one ticket is not subtracted. Referring to a case shown in FIG. 1, this case is a first case for data inconsistency caused by concurrent operations, and is referred to as lost update (Lost Update). Referring to a case shown in FIG. 2, this case is referred to as non-repeatable read (Non-Repeatable Read). Non-repeatable read refers to that after the transaction T1 reads data, T2 executes an update operation, and T1 cannot render the previously read data and obtains a result different from the one obtained for the last time. Referring to a case shown in FIG. 3, this case is referred to as dirty read (Dirty Read). Dirty read refers to that T1 changes data and writes new data back to a database. After T2 reads the same data, T1 is canceled due to a reason; T1 executes rollback and the original data is restored; in this way, T2 reads obsolete data in the process, where the data is a type of junk data referred to as dirty data, and is also incorrect.

From the foregoing example, we can learn that a main reason for data inconsistency is that transactions are not isolated for concurrent operations. Therefore, through correct scheduling, a user's transaction should not be interfered by another transaction, so as to avoid data inconsistency.

A main concurrency control method for using a locking protocol to resolve data inconsistency in concurrency control is locking (Locking). Locking is to schedule concurrent operations in a correct manner to prevent a user's transaction from being interfered by another transaction during an execution process, so as to avoid causing data inconsistency. According to locking, a transaction has a particular control capability over data to be operated by the transaction. Locking generally includes three links. The first link is applying for locking, that is, before operation, a transaction needs to make a locking application for data to be used by the transaction. The second link is acquiring a lock, that is, when conditions are ripe, a system allows the transaction to lock the data, so that the transaction gains control over the data. The third link is releasing the lock, that is, after the operation is complete, the transaction gives up control over the data.

There are two existing locking types as follows:

### 1. Exclusive locks (Exclusive Locks, X locks for short)

An exclusive lock is also referred to as an exclusive lock or a write lock. Once a transaction T adds an exclusive lock (X lock) to a data object A, only T is allowed to read and change A, and any other transactions neither can read or change A nor can add any type of lock to A any more until T releases the lock on A.

### 2. Shared locks (Share Locks, S locks for short)

A shared lock is also referred to as a read lock. If a transaction T adds a shared lock (S lock) to a data object A, another transaction can add only an S lock to A and cannot add an X lock until the transaction T releases the S lock on A. When data is being locked, some rules and protocols need to be additionally defined and executed, including when to apply for a lock, a time for keeping locked, when to release a lock, and the like. These rules are referred to as a locking protocol (Locking Protocol), which is divided into the following three levels in total:
(1) Level 1 locking protocol. According to the level 1 locking protocol, the transaction T needs to first add an X lock to data before the data is changed and does not release the lock until the transaction ends.
(2) Level 2 locking protocol. According to the level 2 locking protocol, the transaction T needs to first add an X lock to to-be-changed data and does not release the X lock until the transaction ends; the transaction T needs to first add an S lock to to-be-read data and releases the S lock immediately after reading is complete.
(3) Level 3 locking protocol. According to the level 3 locking protocol, the transaction T needs to first add an S lock to data before the data is read, needs to first add an X lock to data before the data is changed, and does not release any lock until the transaction ends.

After the locking protocols are executed, a problem caused by data inconsistency in a database operation is overcome.

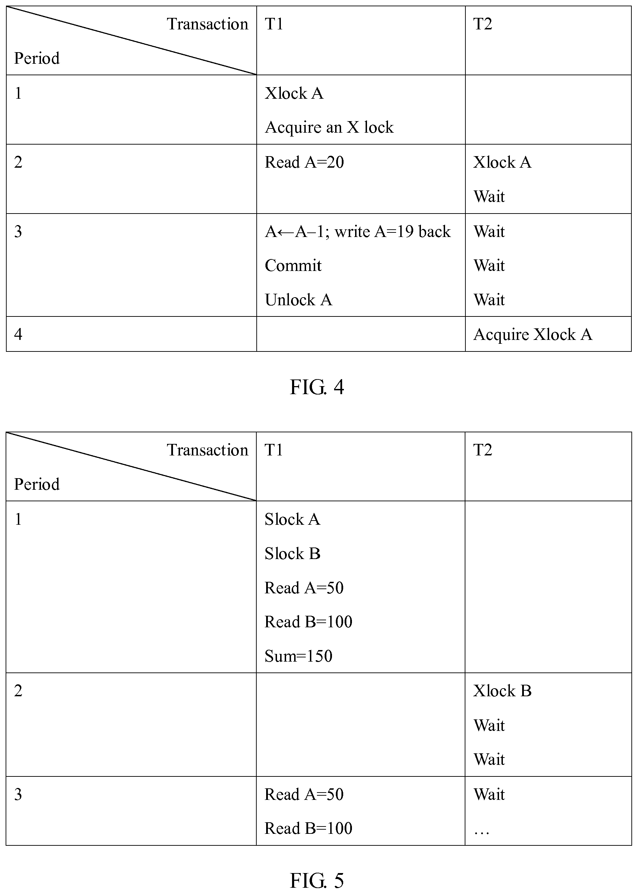

As shown in FIG. 4, a transaction T1 exclusively occupies an object, adds an X lock in an execution process, and does not release the lock until after processing is complete. Although T2 also needs to use the lock, constrained by the locking protocols, the X lock required by T2 is rejected; therefore, T2 needs to be in a wait state and T2 does not gain a right to use until after T1 releases the X lock. In this way, a conflict of use does not occur and data loss is avoided. Herein we can see that, actually the level 1 locking protocol is executed here.

As shown in FIG. 5, because the locking protocols are applied, a transaction T1 uses an S lock to occupy two blocks of data, A and B. In this way, T2 cannot add an X lock (although an S lock can be added, data can be read only but cannot be changed arbitrarily). After T1 releases the lock, T2 can obtain and use the lock. In this way, the data B is still read as 100 and a result of A+B is not affected. This is repeatable read. Herein, the level 3 locking protocol is used.

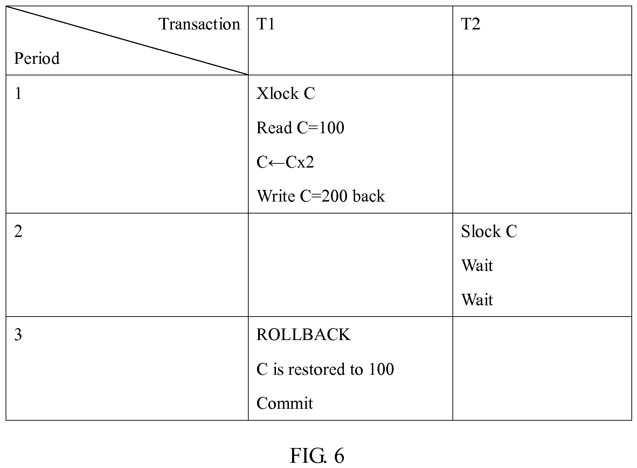

As shown in FIG. 6, a transaction T1 first adds an X lock, changes data C, and writes changed data back to a database. At this time, T2 requests to add an S lock to C. Because T1 has added the X lock, T2 has to wait. When T1 cancels the changed data due to a reason, C is restored to the original data 100. After T1 releases the X lock, T2 acquires the S lock on C and still reads C=100. Therefore, dirty data is avoided being read. Herein, actually the level 2 locking protocol is used.

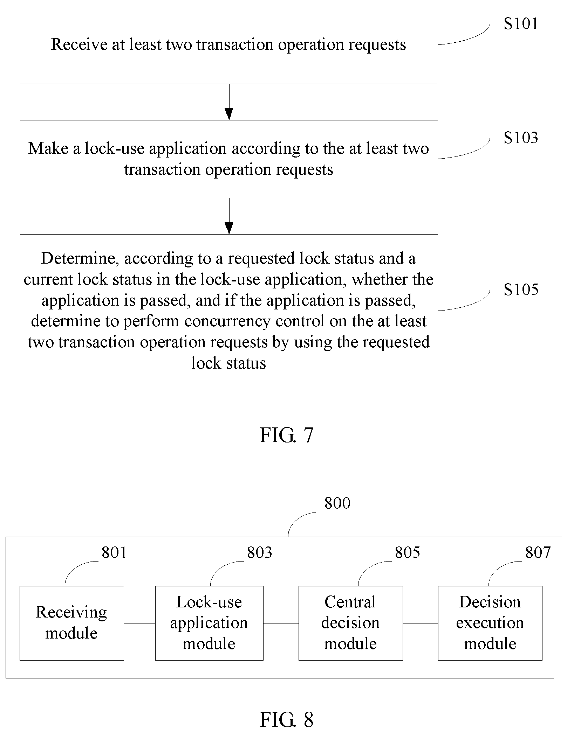

In summary, a database applies a particular locking protocol to avoid a data inconsistency problem; therefore, concurrency control of the database is effective and beneficial, and multiple transactions can concurrently operate a shared resource in the database. This is proper scheduling of a database, avoiding a conflict and avoiding data inconsistency. However, according to the foregoing concurrency control method, while data consistency is ensured, a part of a database system throughput capability is sacrificed. To make a database throughput capability unrestricted in a high concurrency case, an embodiment of the present invention provides a concurrency control method. As shown in FIG. 7, the method includes:
S101: Receive at least two transaction operation requests, where each transaction operation request of the at least two transaction operation requests includes operation object information and operation type information, the operation object information is used to indicate an operation object of the transaction operation request, and the operation type information includes a write operation or a read operation.
S103: Make a lock-use application according to the at least two transaction operation requests.
S105: Determine, according to a requested lock status and a current lock status in the lock-use application, whether the application is passed, and if the application is passed, determine to perform concurrency control on the at least two transaction operation requests by using the requested lock status, where the lock status includes at least three modes: a shared read mode, a shared write mode, and an exclusive mode, where the shared write mode includes allowing two or more write operations to be simultaneously performed on the operation object, and the lock status includes the requested lock status and the current lock status.

Therefore, according to this embodiment of the present invention, at least three lock statuses are provided, including a shared read mode, a shared write mode, and an exclusive mode, where the shared write mode includes allowing two or more write operations to be simultaneously performed on the operation object, so that the write operations can be concurrent, thereby effectively improving a database system throughput capability in a high concurrency case.

Based on the foregoing embodiment, optionally, the determining, according to a requested lock status and a current lock status in the lock-use application, whether the application is passed in step S105 may specifically include:
when both the requested lock status and the current lock status are the shared read mode, or both the requested lock status and the current lock status are the shared write mode, passing the application.

In another optional embodiment of the present invention, if the application is not passed, a next lock-use opportunity is awaited to make the lock-use application again, where the next lock-use opportunity includes an opportunity existing when the current lock status ends.

Specifically, that the application is not passed may include: when the requested lock status or the current lock status is the exclusive mode, or when the requested lock status is the shared write mode and the current lock status is the shared read mode, or when the requested lock status is the shared read mode and the current lock status is the shared write mode, the application is not passed.

Based on all of the foregoing embodiments, this embodiment of the present invention further provides another implementation method, that is, the operation object includes multiple local operation objects, and that the two or more write operations are simultaneously performed on the operation object includes: the two or more write operations are separately performed on different local operation objects in the multiple local operation objects of the operation object.

It should be understood that only when the write operations are separately performed on the different local operation objects, a lock of the concurrent write mode may be applied.

It should be noted that the shared read mode in this embodiment is the previously mentioned shared locks (Share Locks, S locks for short) and the exclusive mode in this embodiment is the previously mentioned exclusive locks (Exclusive Locks, X locks for short), which are not described herein again.

For example, the current lock status is the shared read mode. In this case, if there is a lock-use application request and a requested lock status requested in the lock-use application request is the shared read mode, the lock-use application is passed.

The current lock status is the shared write mode. In this case, if there is a lock-use application request and a requested lock status requested in the lock-use application request is the shared write mode, the lock-use application is passed.

However, if the current lock status is the exclusive mode, and in this case, if there is a lock-use application request, no matter which mode a requested lock status in the request is, the lock-use application is not passed; or
no matter which mode the current lock status is, in this case, if there is a lock-use application request and a requested lock status in the request is the exclusive mode, the lock-use application is not passed.

Moreover, if the current lock status is the shared write mode, and in this case, if there is a lock-use application request and a requested lock status in the request is the shared read mode, the lock-use application is not passed; or
if the current lock status is the shared read mode, and in this case, if there is a lock-use application request and a requested lock status in the request is the shared write mode, the lock-use application is not passed.

In the foregoing content, the concurrency control method according to this embodiment of the present invention is described in detail with reference to FIG. 1 to FIG. 7. The following describes in detail a concurrency control apparatus according to an embodiment of the present invention with reference to FIG. 8.

Before the concurrency control apparatus according to this embodiment of the present invention is described, basic information of a database system is first introduced.

The database system is generally divided into four components: a connection management system, a compiler implementation system, a storage management system, and a transaction system. The transaction system is a core module, which is also most complex, of the entire database system; almost all other modules depend on the transaction system. A query action initiated by a client arrives at a database kernel via the connection management system. In the kernel, the compiler implementation system first parses the query, generates an execution plan, and then hands over the execution plan to an execution engine for execution. In an execution process, data in a memory is accessed by using a storage engine. The whole process is controlled by the transaction system.

The transaction system is divided into three modules in total: a transaction manager module, a log manager module, and a concurrency lock control module. The present invention centers around the concurrency lock control module.

As shown in FIG. 8, this embodiment of the present invention provides a concurrency control apparatus 800, including a receiving module 801, a lock-use application module 803, a central decision module 805, and a decision execution module 807.

The receiving module 801 is configured to receive at least two transaction operation requests, where each transaction operation request of the at least two transaction operation requests includes operation object information and operation type information, the operation object information is used to indicate an operation object of the transaction operation request, and the operation type information includes a write operation or a read operation.

The lock-use application module 803 is configured to make a lock-use application according to the at least two transaction operation requests.

The central decision module 805 is configured to determine, according to a requested lock status and a current lock status in the lock-use application, whether the application is passed, and if the application is passed, determine, by using the decision execution module 807, to perform concurrency control on the at least two transaction operation requests by using the requested lock status, where the lock status includes at least three modes: a shared read mode, a shared write mode, and an exclusive mode, where the shared write mode includes allowing two or more write operations to be simultaneously performed on the operation object, and the lock status includes the requested lock status and the current lock status.

Therefore, according to this embodiment of the present invention, at least three lock statuses are provided, including a shared read mode, a shared write mode, and an exclusive mode, where the shared write mode includes allowing two or more write operations to be simultaneously performed on the operation object, so that the write operations can be concurrent, thereby effectively improving a database system throughput capability in a high concurrency case.

Based on the foregoing embodiment, optionally, the central decision module is specifically configured to determine:
when both the requested lock status and the current lock status are the shared read mode, or both the requested lock status and the current lock status are the shared write mode, to pass the application.

Based on the foregoing embodiment, further optionally, if the central decision module determines that the application is not passed, the central decision module determines to await a next lock-use opportunity to make the lock-use application again, where the next lock-use opportunity includes an opportunity existing when the current lock status ends.

The central decision module may be further specifically configured to determine:
when the requested lock status or the current lock status is the exclusive mode, or when the requested lock status is the shared write mode and the current lock status is the shared read mode, or when the requested lock status is the shared read mode and the current lock status is the shared write mode, not to pass the application.

It should be noted that the operation object may include multiple local operation objects, and that the two or more write operations are simultaneously performed on the operation object includes: the two or more write operations are separately performed on different local operation objects in the multiple local operation objects of the operation object.

It should be noted that an application scenario of the embodiments of the present invention is not just limited to a transaction manager nor limited to a database field. For other scenarios, such as an operating system or application software, any field is applicable as long as the field has characteristics of the application scenario in this solution.

For example, in the application software field, in Dota or another fighting game application, a very importance piece of information is to use a life energy grid bar to display how many drops of blood each fighting team member has at a current moment, so as to denote life energy that is still left. For the entire game system, "life energy grid bar" information of all members is maintained by using a global list. In a fighting process, each member's life energy is updated to a corresponding grid bar in the global list in real time, and the members' update actions do not conflict with each other; therefore, according to this solution of the present invention, concurrent update is performed, so as to improve overall efficiency of a game and to improve satisfaction of game players.

Moreover, it should be further noted that the embodiments of the present invention are not limited to a standalone application scenario, and are also applicable to a cluster, distributed, and the like field. For example, in the cluster scenario, status information of each node may be maintained by using a master node by using a global status list. When each node updates a status, the node needs to initiate a status update request to the master node. Because a global shared list is to be updated, a lock of an exclusive write mode needs to be applied for use, and after update is allowed, an actual update operation is then performed. However, in an update request of each node, only information corresponding to this node in a global status list of the master node needs to be updated, and update locations of the nodes do not conflict with each other. In this scenario, the solution provided by the embodiments of the present invention may be applied, so as to apply for and use a lock of a shared write mode to improve system concurrency.

## Claims

1. A concurrency control method, comprising:
receiving at least two transaction operation requests, wherein each transaction operation request of the at least two transaction operation requests comprises operation object information and operation type information, the operation object information is used to indicate an operation object of the transaction operation request, and the operation type information comprises a write operation or a read operation;
making a lock-use application according to the at least two transaction operation requests; and
determining, according to a requested lock status and a current lock status in the lock-use application, whether the application is passed, and if the application is passed, determining to perform concurrency control on the at least two transaction operation requests by using the requested lock status, wherein the lock status comprises at least three modes: a shared read mode, a shared write mode, and an exclusive mode, wherein the shared write mode comprises allowing two or more write operations to be simultaneously performed on the operation object, and the lock status comprises the requested lock status and the current lock status.

2. The method according to claim 1, wherein the determining, according to a requested lock status and a current lock status in the lock-use application, whether the application is passed comprises:
when both the requested lock status and the current lock status are the shared read mode, or both the requested lock status and the current lock status are the shared write mode, passing the application.

3. The method according to claim 1 or 2, wherein if the application is not passed, a next lock-use opportunity is awaited to make the lock-use application again, wherein the next lock-use opportunity comprises an opportunity existing when the current lock status ends.

4. The method according to claim 3, wherein that if the application is not passed comprises:
when the requested lock status or the current lock status is the exclusive mode, or when the requested lock status is the shared write mode and the current lock status is the shared read mode, or when the requested lock status is the shared read mode and the current lock status is the shared write mode, the application is not passed.

5. The method according to any one of claims 1 to 4, wherein the operation object comprises multiple local operation objects, and that the two or more write operations are simultaneously performed on the operation object comprises: the two or more write operations are separately performed on different local operation objects in the multiple local operation objects of the operation object.

6. A concurrency control apparatus, comprising a receiving module, a lock-use application module, a central decision module, and a decision execution module, wherein
the receiving module is configured to receive at least two transaction operation requests, wherein each transaction operation request of the at least two transaction operation requests comprises operation object information and operation type information, the operation object information is used to indicate an operation object of the transaction operation request, and the operation type information comprises a write operation or a read operation;
the lock-use application module is configured to make a lock-use application according to the at least two transaction operation requests; and
the central decision module is configured to determine, according to a requested lock status and a current lock status in the lock-use application, whether the application is passed, and if the application is passed, determine, by using the decision execution module, to perform concurrency control on the at least two transaction operation requests by using the requested lock status, wherein the lock status comprises at least three modes: a shared read mode, a shared write mode, and an exclusive mode, wherein the shared write mode comprises allowing two or more write operations to be simultaneously performed on the operation object, and the lock status comprises the requested lock status and the current lock status.

7. The apparatus according to claim 6, wherein the central decision module is specifically configured to determine:
when both the requested lock status and the current lock status are the shared read mode, or both the requested lock status and the current lock status are the shared write mode, to pass the application.

8. The apparatus according to claim 6 or 7, wherein if the central decision module determines that the application is not passed, the central decision module determines to await a next lock-use opportunity to make the lock-use application again, wherein the next lock-use opportunity comprises an opportunity existing when the current lock status ends.

9. The apparatus according to claim 8, wherein the central decision module is specifically configured to determine:
when the requested lock status or the current lock status is the exclusive mode, or when the requested lock status is the shared write mode and the current lock status is the shared read mode, or when the requested lock status is the shared read mode and the current lock status is the shared write mode, not to pass the application.

10. The apparatus according to any one of claims 6 to 9, wherein the operation object comprises multiple local operation objects, and that the two or more write operations are simultaneously performed on the operation object comprises: the two or more write operations are separately performed on different local operation objects in the multiple local operation objects of the operation object.
